# EUROPEAN PATENT SPECIFICATION

(11) **EP 3 577 533 B1**
(45) Date of publication and mention of the grant of the patent: **17.07.2024**
(21) Application number: 18716881.0
(22) Date of filing: 28.03.2018
(51) Int. Cl.: G06F 1/16, G06F 3/044

(54) **FOLDABLE DISPLAY DEVICE WITH INTERACTABLE USER INTERFACE SURFACE ON THE EXTERNAL SHELL**
FALTBARE ANZEIGEVORRICHTUNG MIT INTERAKTIVER BENUTZERSCHNITTSTELLENOBERFLÄCHE AUF DER EXTERNEN SCHALE
DISPOSITIF D'AFFICHAGE PLIABLE AVEC SURFACE D'INTERFACE UTILISATEUR INTERPOSABLE SUR LA COQUE EXTERNE

(30) Priority: 04.04.2017 US 201715479073
(43) Date of publication of application: 11.12.2019
(73) Proprietor: Microsoft Technology Licensing, LLC, Redmond, WA 98052-6399 (US)
(72) Inventor: JEUNE, Charlene M., Redmond, Washington 98052-6399 (US); HERNANDEZ SANTISTEBAN, Adolfo, Redmond, Washington 98052-6399 (US); LONG, Donna K., Redmond, Washington 98052-6399 (US); BURNS, Aaron M., Redmond, Washington 98052-6399 (US); KEANE, Brian, Redmond, Washington 98052-6399 (US); MASHAK, Yevdokia K., Redmond, Washington 98052-6399 (US); CABACCANG, Jamie, Redmond, Washington 98052-6399 (US)
(74) Representative: Murgitroyd & Company
(86) International application number: PCT/US2018/024695
(87) International publication number: WO 2018/187101

(56) References cited:
- US-A1- 2010 085 382
- US-B2- 9 274 552

## Description

### BACKGROUND

Mobile electronic devices, such as mobile phones, media players, and tablet computers are increasingly common. These types of devices typically include an integrated display device. In some instances, in order to overcome the size and space limitations that are generally associated with mobile devices manufacturers may offer mobile devices with dual displays that are hinged to open two display devices side-by-side to form one larger display.
US9274552B2 relates to a portable communication device including a first housing, a second housing rotatably coupled with the first housing, and a hinge portion provided between the first housing and the second housing to stepwise rotate the second housing toward or away from the first housing, in which display units are disposed on inner and outer sides of the first housing and the second housing, respectively, such that the display units on the inner and outer surfaces of the housings may be used independently or in conjunction to provide for larger display screens.
US2010085382A1 relates to methods, apparatuses, and computer-readable storage media for displaying an image at an electronic device. In one aspect, a method includes displaying an image at an electronic device that includes a first display surface and a second display surface separated from the first display surface by a gap. A first portion of the image is displayed at the first display surface, a second portion of the image is displayed at the second display surface, and a third portion of the image between the first portion and the second is not displayed. A movement of the electronic device is detected, and in response to detecting the movement, the third portion of the image is displayed at the second display surface.

### SUMMARY

The present invention is defined by the independent claims. Further, optional, features are provided in the dependent claims.

Aspects of the present disclosure provide a foldable display device that includes a user interface surface located on the exterior cover section ("external shell") of the fol dable display device that allows a user to interact with the user interface surface while the foldable display device is in a closed state (e.g., a device that is in face-to-face configuration such as a closed laptop or tablet). Interaction on the user interface surface during the closed state of the foldable display device may selectively modify content to be shown on at least one display screen of the foldable display device on the interior section during a subsequent open state of the foldable display device.

In one example, a foldable display device is disclosed that may include a first section that includes a first display screen and a second section that includes a second display screen. The first section and the second section may be coupled along a longitudinal axis of rotation. In some examples, the first section and the second section may be configured in a closed state such that the first display screen and the second display screen are in a face-to-face configuration. The foldable display device may also include a third section that includes a user interface surface on reverse side of the first section. In some examples, the third section may be an external cover section of the first section, the second section, or both. The user interface surface may be configured to allow interaction by a user with the user interface surface to select content to be shown on one or both of the first display screen or the second display screen during a subsequent open state of the foldable display device.

In another example, a method for controlling content to be displayed on a foldable display device is disclosed. The method may include detecting an input that identifies a user selection of a content on a user interface surface located on an exterior cover section of a foldable display device. The foldable display device may include a first section having a first display screen and a second section having a second display screen. The first section and the second section configured in a closed state such that the first display screen and the second display screen are in a face-to-face configuration. The method may further include displaying the content selected on at least one of a plurality of display screens on an interior section of the foldable display device during a subsequent open state based on detecting the input that enables modification.

In another example, a computer readable medium for controlling content to be displayed on a foldable display device is disclosed. The computer readable medium may include code for detecting an input that identifies a user selection of a content on a user interface surface located on an exterior cover section of a foldable display screen when the foldable display device is in a closed state. The computer readable medium may further include code for displaying the content selected on at least one of a plurality of display screens on an interior section of the foldable display device during a subsequent open state based on the detecting.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

### BRIEF DESCRIPTION OF THE DRAWINGS

FIG. 1 is a schematic diagram of an example of a foldable display device in which features of the present disclosure may operate.
FIG. 2A illustrates an example of an interaction with the user interface surface selectively modifying content on at least one display screen of the foldable display device in accordance with aspects of the present disclosure.
FIG. 2B illustrates a technique of the present disclosure that allows an object drawn on the user interface surface to be stored for display on at least one display screen of the foldable display device.
FIG. 3 is a diagram illustrating an example of a hardware implementation for the foldable display device in accordance with various aspects of the present disclosure.
FIG. 4 is a flow chart of one method implemented on the foldable display device in accordance with various aspects of the present disclosure.
FIG. 5 is a flow chart of another method implemented on the foldable display device in accordance with various aspects of the present disclosure.

### DETAILED DESCRIPTION

Manufacturers, in order to overcome the size and space limitations of mobile devices that maintain the portability functionality, offer mobile devices with foldable configurations (e.g., laptops, tablets, etc.) such that the device including at least one display screen may be folded against a base section (e.g., keyboard or another display) in a face-to-face configuration. However, conventional foldable mobile devices require the user to open the device in order to interact with or use any functionality of the mobile device. However, opening the device for every interaction may not be feasible or desirable. For example, in a limited space environment such as an economy cabin of most airlines that provides limited space to comfortably open a foldable device, it may not be possible for user to interact with the device in the manner he or she would prefer. In other instances, the user may not want to open the foldable device due to privacy concerns that may expose the screen to other people around the foldable mobile device.

Aspects of the present disclosure solve the above-identified problem by providing a foldable display device that includes a user interface surface located on the exterior cover section of the foldable display device that allows a user to interact with the user interface surface while the foldable display device is in a closed state (e.g., a device that is in face-to-face configuration such as a closed laptop or tablet). Interaction on the user interface surface during the closed state of the foldable display device may allow the user to select content to be shown on at least one display screen of the foldable display device on the interior section during a subsequent open state of the foldable display device. For the purposes of the present disclosure, the term "content" may refer to any one or more of a plurality of applications, folders, subfolders, or files that may be available on the foldable display device. As a nonlimiting example, if the user selects Microsoft Word^{®} application by interacting with the user interface surface during the closed state of the foldable display device, the foldable display device may be configured to open Microsoft Word^{®} application when the foldable display device transitions from the closed state to the open state (e.g., the first section and the second section are "opened" such that the first display screen and/or the second display screen are accessible to the user. Additionally or alternatively, the user, during the closed state of the foldable display device, may select a particular file (e.g., recipe file). In such instance, the foldable display device may prioritize opening / displaying the content selected on the user interface surface during the closed state when the foldable display device transitions to the open state.

In other examples, the user interface surface may be configured to allow an object produced (e.g., drawn or written) on the user interface surface to be stored for display on at least one of the first display screen, the second display screen, or the user interface surface. As discussed below, and for the purposes of the present disclosure, the term "object" may refer to one or more of objects drawn or scribed (e.g., figures), text, and/or graphic produced. In some examples, the user interface surface may be either another display screen or a durable material that includes display properties such as a fabric with light-emitting diode(s) (LEDs) intertwined in the fabric.

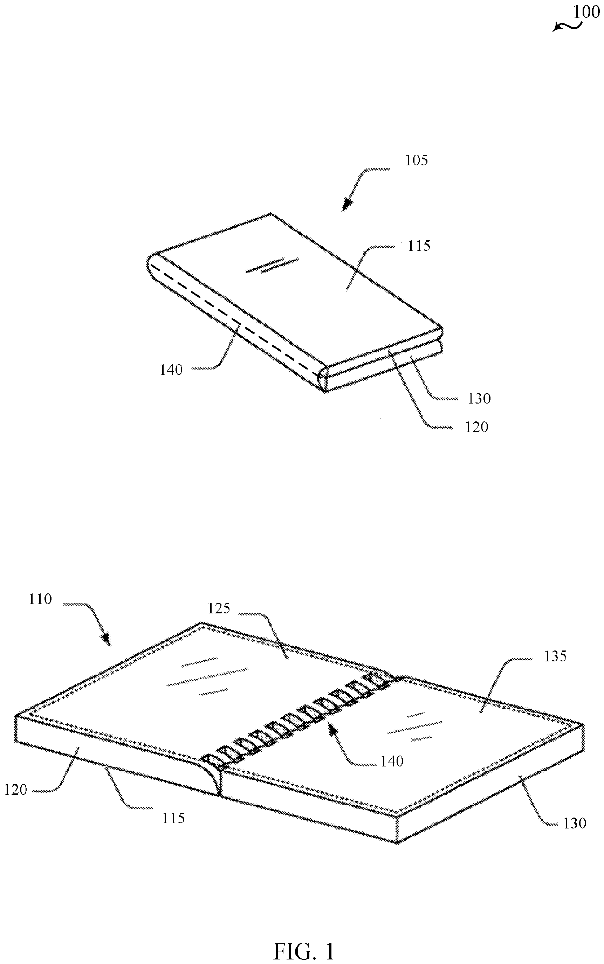

Various aspects are now described in more detail with reference to the FIGs. 1-5. In the following description, for purposes of explanation, numerous specific details are set forth in order to provide a thorough understanding of one or more aspects. It may be evident, however, that such aspect(s) may be practiced without these specific details. Additionally, the term "component" as used herein may be one of the parts that make up a system, may be hardware, firmware, and/or software stored on a computer-readable medium, and may be divided into other components.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

Turning first to FIG. 1, a foldable display device 100 is illustrated in both a closed state 105 and an open state 110. The foldable display device 100 includes a first section 120 that includes a first display screen 125 and a second section 130 that includes a second display screen 135. In some instances, however, the second section 130 may omit the second display screen 135 in favor of a touch panel or a keyboard (e.g., laptops). The first section 120 and the second section 130 are coupled along a longitudinal axis of rotation 140 such that in a closed state 105, the first display screen 125 and the second display screen 135 may be in a face-to-face configuration.

The foldable display device 100 also includes a third section that may be an exterior cover section that includes a user interface surface 115 on the reverse side of the first section 120. It should be appreciated by those of ordinary skill in the art that the exterior cover section would additionally or alternatively include the reverse side of the second section 130. In some examples, the exterior cover section that includes the user interface surface 115 may either be a durable display or a fabric that includes LED properties while eliciting a texture that is different from a typical display screen. To that end, the fabric may be layered or woven through with one or more of touch capacitance, LEDs or organic LED (OLED) display covering at least portion of the fabric. The fabric may further include biometric or fingerprint sensors to identify the user holding (e.g., based on user fingerprints) the foldable display device 100. The biometric or fingerprint sensors may allow the foldable display device 100 to customize content based on the credentials of the detected user. In some examples, the foldable display device 100 may require authentication by the user when the foldable display device 100 is transitioned from a closed state 105 to an open state 110 before the selected content is displayed on the first display screen 125 and/or second display screen 135. The step of authenticating the user upon opening the foldable display device 100 may be bypassed (or skipped) if the biometric or fingerprint sensors on the exterior section of the foldable display device 100 authenticate the user's credentials.

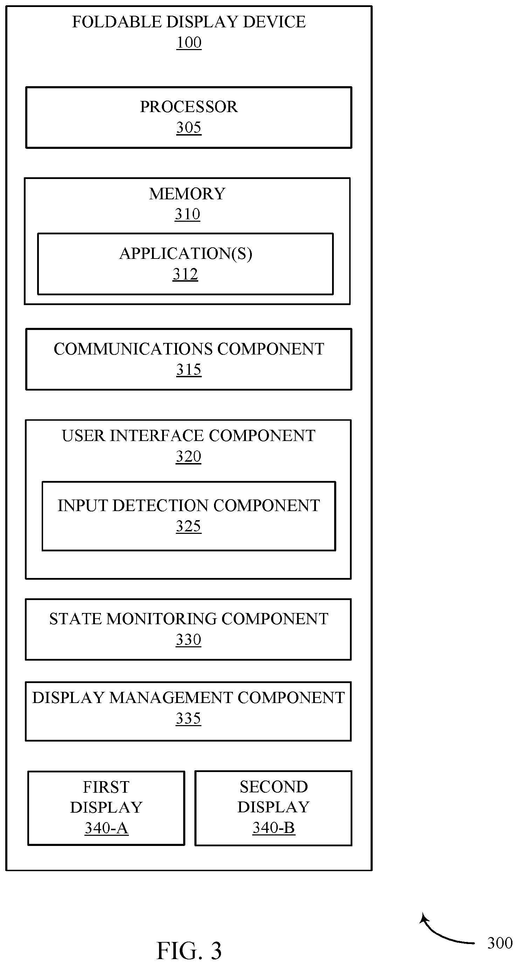

In accordance with aspects of the present disclosure, the user interface surface 115 on the exterior cover section is configured to allow interaction by a user with the user interface surface 115 to select content during the closed state 105 of the foldable display device 100. The selected content may be accessible to be shown on one or both of the first display screen 125 or the second display screen 135 during a subsequent open state 110 of the foldable display device 100. For example, a user may select from a plurality of applications that may be available on the foldable display device. Displaying a plurality of applications may include displaying graphical information, including icons, images, videos, and text associated with the applications that may be available on the foldable display device 100. Additionally or alternatively, the foldable display device 100 may include a pre-defined subset of applications/journals from a full set of applications/ journals that the user may select from. Because the foldable display device 100 may be in the closed state 105 when the user interfaces with the user interface surface 115, the applications may be in idle or sleep mode. The term "idle or sleep mode" may refer to an inactive state of the application where one or more functionalities of the application are running in a background process of the processor (e.g., processor 305 in FIG. 3) associated with the foldable display device 100.

Thus, a user may be able to select from a plurality of applications by either selecting from a drop down menu or by swiping across the plurality of options, the application to launch in the subsequent open state of the foldable display device 100. It should be appreciated that the selection of content to be displayed is not limited to either selection from a drop down menu or swiping examples described above. Instead, the indication of user's selection may be based on any one or more of swiping, tapping, double-tapping, drawing, or detection of a user's gesture. Further, the selection of the content may also be non-visual (e.g., associating different selections options to a different haptic feedback). With respect to the selection based on a drawing, the foldable display device 100 may include a predetermined objects that may be associated with a particular action. For example, the user drawing a cross on the user interface surface 115 may direct the foldable display device 100 to open a Microsoft word^{®} application, while drawing a circle may direct the foldable display device 100 to open a cookbook application.

Further, for each of the plurality of applications, the user interface surface 115 may further provide a list of subfolders or files that may be selectable. For instance, if a Microsoft Word^{®} application is selected, the user may further be provided options to select from a list of available Word files. In some examples, the selected application may be prioritized for activation when the foldable display device 100 transitions from the closed state 105 to an open state.

Additionally or alternatively, the user interface surface 115 on the exterior cover section may be configured to allow an object produced (e.g., drawn or written by either a finger, pen or stylus interaction) on the user interface surface 115 to be stored for display on at least one of the first display screen 125, the second display screen 135, or the user interface surface 115. For example, a self-reminder such as text of "buy flowers" or "buy milk" may be written on the user interface surface 115 or alternatively a flower may be drawn by the user interaction on the user interface surface 115. The object produced may be stored for display on either one or more of the display screens (e.g., first display screen 125 or the second display screen 135) or the user interface surface 115 when triggered by the user, for example, by initiating a save action (e.g., double tapping the stylus on the user interface surface or clicking on 'save' icon).

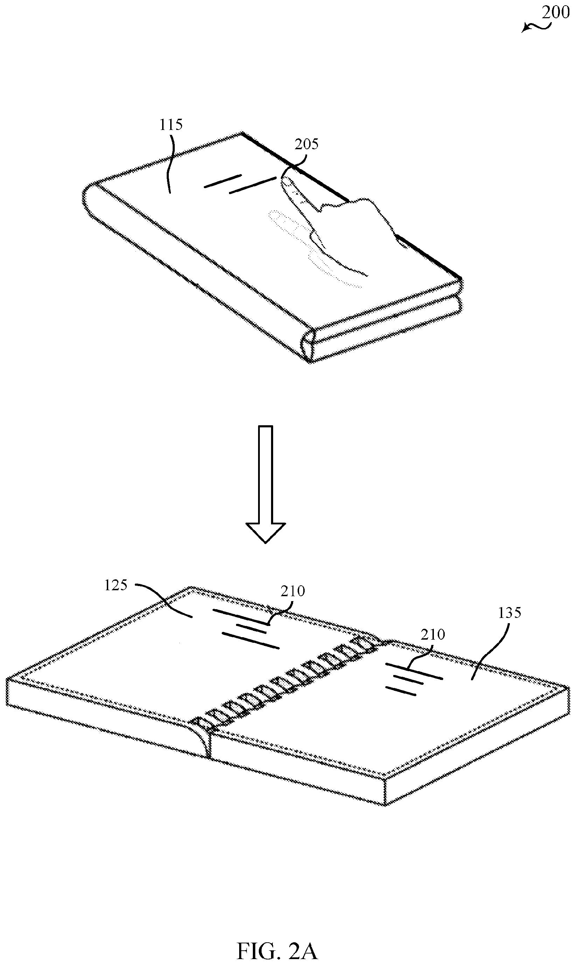

FIG. 2A is a diagram 200 of an interaction 205 with the user interface surface 115 that allows the user to select content on at least one display screen (e.g., first display screen 125 or second display screen 135) of the foldable display device 100 when the foldable display device 100 transitions from a closed state 105 to an open state 110. While diagram 200 illustrates the user interface surface 115 encompassing the entire exterior cover section, those of ordinary skill would appreciate that the user interface surface 115 can be a portion of the exterior cover section and is not limited to the entire area of the exterior cover section.

In one example, while the foldable display device 100 is in the closed state 105, the user interface surface 115 on the exterior cover section may display a plurality of applications, folders, subfolders, or files that may be available on the foldable display device 100. The plurality of applications, folders, subfolders, or files may be displayed in any manner, including, but not limited to, dropdown menus options, scrolling list, or searchable format where a user writes at least partial name of the application, folder, subfolder, or file to open during the subsequent open state. For instance, a user may write or select "cookbook" on the user interface surface 115 during the closed state. Selection of the "cookbook" content may trigger the foldable display device 100 to search the database in the memory of the foldable display device 100 to identify applications, folders, subfolders, or files that may be associated with the term "cookbook" in order to find and open the appropriate application, folder, or file. This may include, for example, electronic cooking books or user created recipe files. Accordingly, the foldable display device 100, based on the selection of the content on the user interface surface 115, prioritizes the selected content 210 from a plurality of contents to be displayed by activating applications associated with the selected content ahead of applications associated with non-selected content. The selected content 210 is displayed on at least one or both of the first display screen 125 or the second display screen 135 when the foldable display device 100 transitions from the closed state 105 to the open state 110.

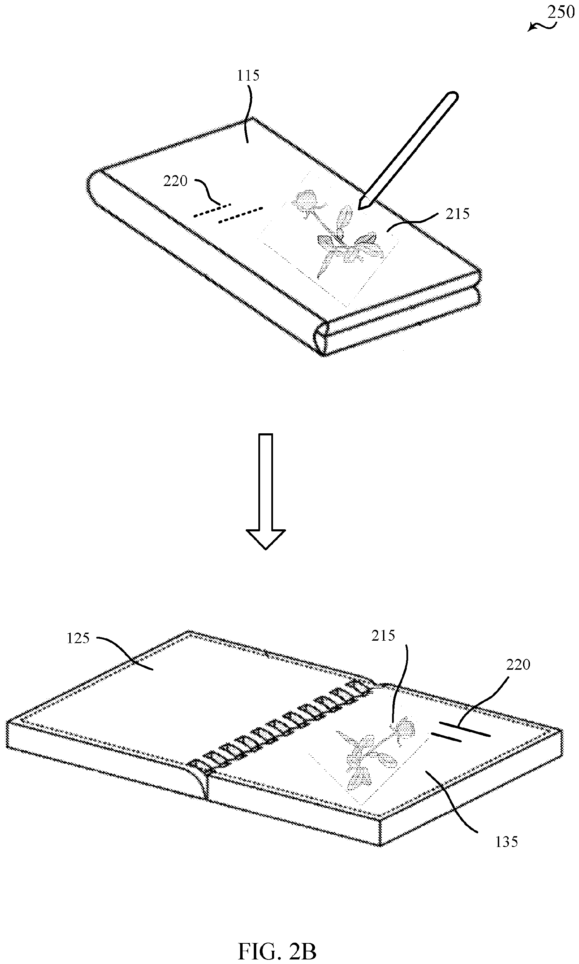

FIG. 2B is a diagram 200 of the foldable display device 100 that allows an object 215 produced (e.g., drawn or written by interaction with one or more of user's finger, pencil, or stylus) on the user interface surface 115 on the exterior section of the foldable display device 100 to be stored for display on at least one display screen (e.g., first display screen 125, second display screen 135) of the foldable display device or the user interface surface 115 itself. For instance, the object 215 in the illustrated example may be a flower corresponding to text 220 "buy flowers" that may be written by the user on the user interface surface 115 as a reminder. In accordance with features of the present disclosure, the term "object" may broadly encompass either the object 215 itself and/or the corresponding text 220. Thus, for the purposes of this disclosure, where the user interface surface may be configured to allow an "object" produced on the user interface surface to be stored for display on at least one of the first display screen, the second display screen, or the user interface surface, the term "object" may refer to one or both of any figure that is drawn, text that is written, or a graphic produced by the user as an interaction on the user interface surface. Once scribed, the object 215 may be clicked on (or tapped) with a stylus, for example, to store the object 215 and text 220.

Once the object 215 or corresponding text 220 written is saved, the foldable display device 100 may display the object 215 and/or corresponding text 220 on at least one display screen (e.g., first display screen 125, second display screen 135) of the foldable display device or the user interface surface 115. The object 215 may be displayed as a reminder to be viewed later one of the plurality of displays. In some aspects, once saved, the corresponding text 220 may be removed from the display of at least one display screen and/or user interface surface 115 while the object 215 remains as a reminder for the user. However, clicking on the object 215 may allow the corresponding text 220 to reappear (or redisplayed) so that it may remind the user of the correlation or any "to-do" tasks. Thus, in some aspects, the foldable display device 100 may hide or remove the corresponding text 220 from being displayed on at least one of the plurality of display screens or the user interface surface 115 during a first time period. Upon detecting a query (e.g., by way of user subsequently clicking on the object 215 as a user input), the foldable display device 100 may again display the corresponding text 220 on at least one of the plurality of display screens or the user interface surface during a second time period.

Referring now to FIG. 3, a diagram illustrating an example of a hardware implementation for a foldable display device 100 in accordance with various aspects of the present disclosure is described. In some examples, the foldable display device 100 may include a processor 305 for carrying out one or more processing functions (e.g., method 400 and 500) described herein. The processor 305 may include a single or multiple set of processors or multi-core processors. Moreover, the processor 305 can be implemented as an integrated processing system and/or a distributed processing system.

The foldable display device 100 may further include memory 310, such as for storing local versions of applications being executed by the processor 305. In some aspects, the memory 310 may be implemented as a single memory or partitioned memory. In some examples, the operations of the memory 310 may be managed by the processor 305. Memory 310 can include a type of memory usable by a computer, such as random access memory (RAM), read only memory (ROM), tapes, magnetic discs, optical discs, volatile memory, non-volatile memory, and any combination thereof. Additionally, the processor 305, and memory 310 may include and execute operating system (not shown). The memory 310 may also include one or more application(s) 312 that may be available for the foldable display device 100. The processor 305 may execute one or more processes associated with the applications 312.

Further, foldable display device 100 may include a communications component 315 that provides for establishing and maintaining communications with one or more parties utilizing hardware, software, and services as described herein. Communications component 315 may carry communications between components on foldable display device 100, as well as between foldable display device 100 and external devices, such as to electronic devices coupled locally to the foldable display device 100 and/or located across a communications network and/or devices serially or locally connected to foldable display device 100. For example, communications component 315 may include one or more buses operable for interfacing with external devices.

The foldable display device 100 may also include a user interface component 320 operable to receive inputs from a user of foldable display device 100 and further operable to generate outputs for presentation to the user. In some examples, the user interface component 320 may be part of the user interface surface 115 described with reference to FIG. 1. User interface component 320 may include one or more input devices, including but not limited to a touch-sensitive display, a navigation key, a function key, a microphone, a voice recognition component, any other mechanism capable of receiving an input from a user, or any combination thereof. Further, user interface component 320 may include one or more output devices, including but not limited to a display, a speaker, any other mechanism capable of presenting an output to a user, or any combination thereof. In some examples, the user interface component 320 may further include an input detection component 325 for detecting an input on a user interface surface located on an exterior cover section of a foldable display device 100 while the foldable display device 100 is in a closed state.

The foldable display device 100 may also include a state monitoring component 330 to identify the current state of the foldable display device 100. For example, based on detecting the proximity of the first section (or first display screen) to the second section (or the second display screen), the state monitoring component 330 may determine whether the foldable display device 100 is in a closed state (e.g., first section and the second section in a face-to-face configuration) or in an open state (e.g., first section and the second section in a side-by-side configuration). While the "face-to-face" configuration and "side-by-side configuration" as illustrated in FIG. 1 may respectively define the foldable display device state as either closed or open, it should be appreciated by those of ordinary skill that the state transitions are not limited to such extremes. Instead, variables between the two configurations (e.g., partially open or closed) may also allow the state monitoring component 330 to identify the state of the foldable display device 100 as open or closed. For example, state monitoring component 330 may be configured to identify the foldable display device 100 as being in the closed state when an angle formed between the first section 120 and the second section 130 about the longitudinal axis of rotation 140 is less than a state threshold value (e.g., 30 degrees). Conversely, state monitoring component 330 may configured to identify the foldable display device 100 as being in the open state when an angle formed between the first section 120 and the second section 130 about the longitudinal axis of rotation 140 is greater than a state threshold value (e.g., 30 degrees). It should be appreciated that the 30 degrees example is only used as one example, and the state threshold value can be adjustable based on the type of the foldable display device 100. Thus, in some examples, the state monitoring component 330 may identify the foldable display device 100 when an angle formed between the first section 120 and the second section 130 is greater than 180 degrees (e.g., the foldable display device 100 configured in a "tent" position where the first display screen 125 and the second display screen 135 are facing outwards.

The foldable display device 100 may also include a display management component 335 for modifying content to be displayed on at least one of a plurality of display screens (e.g., first display 340-a and/or second display 340-b) on an interior section of the foldable display device during a subsequent open state based on detecting an input on a user interface surface located on an exterior cover section during the closed state of the foldable display device 100. In some examples, the interior section may refer to the first display screen and the second display screen (or the inside of the first section and the second section). Similarly, the exterior cover section may refer to the outer cover of the first display screen and the second display screen. The display management component 335 may also store an object for display on one or more of a the user interface surface or the plurality of display screens located on an interior section of the foldable display screen when the foldable display device 100 transitions from a closed state to an open state. In some examples, based on the user interaction on the user interface surface on the exterior cover section, the display management component 335 may activate one or more applications (or files) that were in sleep mode such that the selected applications and files are already opened and available to the user when the foldable display device 100 is opened. To that end, the display management component 335 may prioritize which applications to activate first when the foldable display device 100 transitions from closed state to open state.

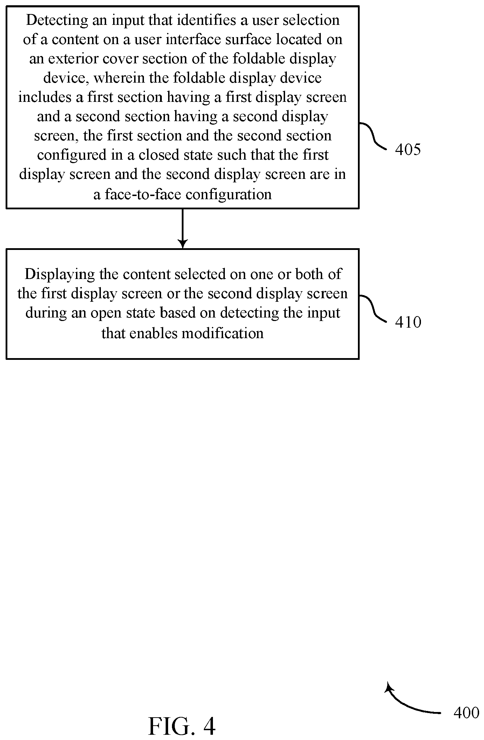

Referring to FIG. 4, an example method 400 for controlling content to be displayed on the foldable display device is described. The method 400 may be performed by the foldable display device 100 as described with reference to FIGs. 1 and 3. Although the method 400 is described below with respect to the elements of the foldable display device 100, other components may be used to implement one or more of the steps described herein.

At block 405, the method 400 may include detecting an input that identifies a user selection of a content on a user interface surface located on an exterior cover section of a foldable display device. The foldable display device may include a first section having a first display screen and a second section having a second display screen. The first section and the second section may be configured in a closed state such that the first display screen and the second display screen are in a face-to-face configuration. In some examples, the detecting the input on the user interface surface on the exterior cover section may be in response to the foldable display device displaying a plurality of applications (or subfolders/files) available on the foldable display device. In some aspects, when the plurality of applications are listed or displayed on the user interface surface during the closed state of the foldable display device, the plurality of applications may be in sleep state. However, the input on the user interface surface may trigger an application from the plurality of applications to transition from the sleep state to an active state when the foldable display device is subsequently transitioned from the closed state to the open state. Aspects of block 405 may be performed by input detection component 325 described with reference to FIG. 3.

At block 410, the method 400 may include displaying the content selected on one or both of the first display screen or the second display screen during an open state based on the input that enables selection. In some examples, selecting the content to be displayed may include prioritizing, based on the detecting of the input, a selected content from a plurality of contents to be displayed by activating applications, folders, subfolders, or files associated with the selected content ahead of applications associated with non-selected content. Aspects of block 410 may be performed by display management component 335 described with reference to FIG. 3.

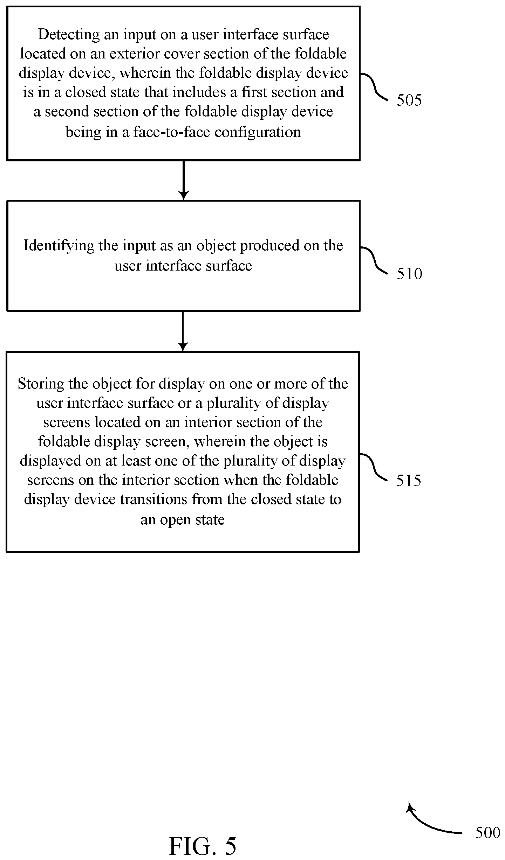

Referring to FIG. 5, another example method 500 for controlling content to be displayed on the foldable display device is described. The method 500 may also be performed by the foldable display device 100 as described with reference to FIGs. 1 and 3. Although the method 500 is described below with respect to the elements of the foldable display device 100, other components may be used to implement one or more of the steps described herein.

At block 505, the method 500 may include detecting an input on a user interface surface located on an exterior cover section of a foldable display device. The foldable display device may be in a closed state when the input is detected. Aspects of block 505 may be performed by input detection component 325 described with reference to FIG. 3.

At block 510, the method 500 may include identifying the input as an object produced on the user interface surface. Aspects of block 510 may be performed by display management component 335 described with reference to FIG. 3.

At block 515, the method 500 may include storing the object for display on one or more of the user interface surface or a plurality of display screens located on an interior section of the foldable display screen. The object may be displayed on at least one of the plurality of display screens on the interior section when the foldable display device transitions from the closed state to an open state. In some examples, the method may further include associated the object produced on the user interface surface with a corresponding text that is produced on the user interface surface. Aspects of block 515 may also be performed by display management component 335 described with reference to FIG. 3.

As used in this application, the terms "component," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a device (e.g., foldable display device 100), which can be a wired device or a wireless device. A wireless device may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. In contract, a wired device may include a server operable in a data centers (e.g., cloud computing).

It is understood that the specific order or hierarchy of blocks in the processes / flow charts disclosed is an illustration of exemplary approaches. Based upon design preferences, it is understood that the specific order or hierarchy of blocks in the processes / flow charts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

It should be appreciated to those of ordinary skill that various aspects or features are presented in terms of systems that may include a number of devices, components, modules, and the like. It is to be understood and appreciated that the various systems may include additional devices, components, modules, etc. and/or may not include all of the devices, components, modules etc. discussed in connection with the figures.

The various illustrative logics, logical blocks, and actions of methods described in connection with the embodiments disclosed herein may be implemented or performed with a specially-programmed one of a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more components operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave may be included in the definition of medium. Disk and disc, as used herein, includes compact disc (CD), laser disc, optical disc, digital versatile disc (DVD), floppy disk and Blu-ray disc where disks usually reproduce data magnetically, while discs usually reproduce data optically with lasers. Combinations of the above should also be included within the scope of computer-readable media.

While aspects of the present disclosure have been described in connection with examples thereof, it will be understood by those skilled in the art that variations and modifications of the aspects described above may be made without departing from the scope hereof. Other aspects will be apparent to those skilled in the art from a consideration of the specification or from a practice in accordance with aspects disclosed herein.

## Claims

1. A foldable display device (100), comprising:
a first section (120) that includes a first display screen (125);
a second section (130) that includes a second display screen (135), wherein the first section and the second section are coupled along a longitudinal axis of rotation (140), the first section and the second section configured so that in a closed state the first display screen and the second display screen are in a face-to-face configuration; and
a third section that includes a user interface surface (115) on a reverse side of the first section, wherein the user interface surface is configured to allow interaction by a user to select content, during the closed state, to be shown on one or both of the first display screen or the second display screen during an open state of the foldable display device,
wherein the foldable display device is further configured to prioritize the selected content (21) from a plurality of contents to be displayed by activating applications associated with the selected content in response to the foldable display device transitioning from the closed state to the open state.

2. The foldable display device of claim 1, wherein the user interface surface to select the content is further configured to display an activated application from a plurality of applications available on the foldable display device.

3. The foldable display device of claim 2, wherein the plurality of applications available on the foldable display device are in a sleep state, and
wherein the interaction with the user interface surface to select an application from the plurality of applications transitions the activated application from the sleep state to an active state when the foldable display device is transitioned from the closed state to the open state.

4. The foldable display device of claim 1, wherein the foldable display device is configured to identify being in the closed state when an angle formed between the first section and the second section about the longitudinal axis of rotation is less than a state threshold value.

5. The foldable display device of claim 1, wherein the foldable display device is configured to identify being in the open state when an angle formed between the first section and the second section about the longitudinal axis of rotation is greater than a state threshold value.

6. The foldable display device of claim 1, wherein the third section that includes the user interface surface is a fabric with at least one or more of layered light emitting diodes or touch capacitance woven into the fabric.

7. A method for controlling content to be displayed on a foldable display device, comprising:
detecting (405) an input that identifies a user selection of a content on a user interface surface located on an exterior cover section of the foldable display device, wherein the foldable display device includes a first section having a first display screen and a second section having a second display screen, the first section and the second section configured in a closed state such that the first display screen and the second display screen are in a face-to-face configuration, and the user interface surface being on a reverse side of the first section; and
displaying (410) the content selected on one or both of the first display screen or the second display screen during an open state based on detecting the input that enables selection,
wherein selecting the content to be displayed on the at least one of the plurality of display screens on the interior section of the foldable display device during the open state comprises prioritizing, based on the detecting, a selected content from a plurality of contents to be displayed by activating applications associated with the selected content in response to the foldable display device transitioning from the closed state to the open state.

8. The method of claim 7, further comprising:
displaying an activated application from a plurality of applications available on the foldable display device on the user interface surface, and
wherein detecting the input on the user interface surface located on the exterior cover section is in response to displaying the plurality of applications.

9. The method of claim 8, wherein the plurality of applications available on the foldable display device are in a sleep state, and the method further comprises:
triggering, in response to detecting the input, the activated application from the plurality of applications to transition from the sleep state to an active state when the foldable display device is transitioned from the closed state to the open state.

10. The method of claim 7, further comprising:
identifying the foldable display device as being configured in the closed state when an angle formed between the first section and the second section about the longitudinal axis of rotation is less than a state threshold value.

11. The method of claim 7, further comprising:
identifying the foldable display device as being configured in the open state when an angle formed between the first section and the second section about the longitudinal axis of rotation is greater than a state threshold value.

12. The method of claim 7, wherein the exterior cover section that includes the user interface surface is a fabric with at least one or more of layered light emitting diodes or touch capacitance woven into the fabric.

13. A computer readable medium storing computer-executable instructions, which when executed by a processor control content to be displayed on a foldable display device according to the methods of any of claims 7-12.

## Patentansprüche

1. Faltbare Anzeigevorrichtung (100), umfassend:
einen ersten Abschnitt (120), der einen ersten Anzeigebildschirm (125) beinhaltet;
einen zweiten Abschnitt (130), der einen zweiten Anzeigebildschirm (135) beinhaltet, wobei der erste Abschnitt und der zweite Abschnitt entlang einer Längsdrehachse (140) gekoppelt sind, wobei der erste Abschnitt und der zweite Abschnitt so konfiguriert sind, dass sich der erste Anzeigebildschirm und der zweite Anzeigebildschirm in einem geschlossenen Zustand in einer Konfiguration von Angesicht zu Angesicht befinden; und
einen dritten Abschnitt, der eine Benutzerschnittstellenoberfläche (115) auf einer Rückseite des ersten Abschnitts beinhaltet, wobei die Benutzerschnittstellenoberfläche so konfiguriert ist, dass sie eine Interaktion durch einen Benutzer ermöglicht, um während des geschlossenen Zustands Inhalte auszuwählen, die während eines offenen Zustands der faltbaren Anzeigevorrichtung auf einem oder beiden des ersten Anzeigebildschirms oder des zweiten Anzeigebildschirms angezeigt werden sollen,
wobei die faltbare Anzeigevorrichtung ferner so konfiguriert ist, dass sie den ausgewählten Inhalt (21) aus einer Vielzahl von anzuzeigenden Inhalten priorisiert, indem sie Anwendungen aktiviert, die mit dem ausgewählten Inhalt verbunden sind, wenn die faltbare Anzeigevorrichtung von dem geschlossenen Zustand in den offenen Zustand übergeht.

2. Faltbare Anzeigevorrichtung nach Anspruch 1, wobei die Benutzerschnittstellenoberfläche zur Auswahl des Inhalts ferner so konfiguriert ist, dass sie eine aktivierte Anwendung aus einer Vielzahl von Anwendungen anzeigt, die auf der faltbaren Anzeigevorrichtung verfügbar ist.

3. Faltbare Anzeigevorrichtung nach Anspruch 2, wobei die Vielzahl von Anwendungen, die auf der faltbaren Anzeigevorrichtung verfügbar ist, sich in einem Ruhezustand befindet, und
wobei die Interaktion mit der Benutzerschnittstellenoberfläche zur Auswahl einer Anwendung aus der Vielzahl von Anwendungen die aktivierte Anwendung aus dem Ruhezustand in einen aktiven Zustand überführt, wenn die faltbare Anzeigevorrichtung aus dem geschlossenen Zustand in den offenen Zustand überführt wird.

4. Faltbare Anzeigevorrichtung nach Anspruch 1, wobei die faltbare Anzeigevorrichtung so konfiguriert ist, dass sie den geschlossenen Zustand identifiziert, wenn ein zwischen dem ersten Abschnitt und dem zweiten Abschnitt gebildeter Winkel um die Längsdrehachse kleiner als ein Zustandsschwellenwert ist.

5. Faltbare Anzeigevorrichtung nach Anspruch 1, wobei die faltbare Anzeigevorrichtung so konfiguriert ist, dass sie den offenen Zustand identifiziert, wenn ein zwischen dem ersten Abschnitt und dem zweiten Abschnitt gebildeter Winkel um die Längsdrehachse größer als ein Zustandsschwellenwert ist.

6. Faltbare Anzeigevorrichtung nach Anspruch 1, wobei der dritte Abschnitt, der die Benutzerschnittstellenoberfläche beinhaltet, ein Gewebe ist, in das mindestens eine oder mehrere Schichten von Leuchtdioden oder Berührungskapazität eingewebt sind.

7. Verfahren zum Steuern von Inhalten, die auf einer faltbaren Anzeigevorrichtung angezeigt werden sollen, umfassend:
Erkennen (405) einer Eingabe, die eine Benutzerauswahl eines Inhalts auf einer Benutzerschnittstellenoberfläche identifiziert, die sich auf einem äußeren Abdeckungsbereich der faltbaren Anzeigevorrichtung befindet, wobei die faltbare Anzeigevorrichtung einen ersten Abschnitt mit einem ersten Anzeigebildschirm und einen zweiten Abschnitt mit einem zweiten Anzeigebildschirm aufweist, wobei der erste Abschnitt und der zweite Abschnitt in einem geschlossenen Zustand konfiguriert sind, sodass sich der erste Anzeigebildschirm und der zweite Anzeigebildschirm in einer Konfiguration von Angesicht zu Angesicht befinden und die Benutzerschnittstellenoberfläche sich auf einer Rückseite des ersten Abschnitts befindet; und
Anzeigen (410) des ausgewählten Inhalts auf einem oder beiden des ersten Anzeigebildschirms oder dem zweiten Anzeigebildschirms während eines offenen Zustands basierend auf dem Erkennen der Eingabe, die die Auswahl ermöglicht,
wobei das Auswählen des Inhalts, der auf dem mindestens einen der Vielzahl von Anzeigebildschirmen auf dem inneren Abschnitt der faltbaren Vorrichtung während des offenen Zustands angezeigt werden soll, das Priorisieren eines ausgewählten Inhalts aus einer Vielzahl von Inhalten, die angezeigt werden sollen, basierend auf dem Erkennen, durch Aktivieren von Anwendungen, die mit dem ausgewählten Inhalt verbunden sind, wenn die faltbare Vorrichtung von dem geschlossenen Zustand in den offenen Zustand übergeht, umfasst.

8. Verfahren nach Anspruch 7, ferner umfassend:
Anzeigen einer aktivierten Anwendung aus einer Vielzahl von Anwendungen, die auf der faltbaren Anzeigevorrichtung verfügbar sind, auf der Benutzerschnittstellenoberfläche, und
wobei das Erkennen der Eingabe auf der Benutzerschnittstellenoberfläche, die sich an dem äußeren Abdeckungsbereich befindet, erfolgt, wenn die Vielzahl von Anwendungen angezeigt wird.

9. Verfahren nach Anspruch 8, wobei die Vielzahl von Anwendungen, die auf der faltbaren Anzeigevorrichtung verfügbar ist, sich in einem Ruhezustand befindet, und wobei das Verfahren ferner umfasst:
Auslösen, wenn die Eingabe erkannt wird, der aktivierten Anwendung aus der Vielzahl von Anwendungen, um von dem Ruhezustand in einen aktiven Zustand überzugehen, wenn die faltbare Anzeigevorrichtung von dem geschlossenen Zustand in den offenen Zustand überführt wird.

10. Verfahren nach Anspruch 7, ferner umfassend:
Identifizieren der faltbaren Anzeigevorrichtung als in dem geschlossenen Zustand konfiguriert, wenn ein zwischen dem ersten Abschnitt und dem zweiten Abschnitt um die Längsdrehachse gebildeter Winkel kleiner als ein Zustandsschwellenwert ist.

11. Verfahren nach Anspruch 7, ferner umfassend:
Identifizieren der faltbaren Anzeigevorrichtung als in dem offenen Zustand konfiguriert, wenn ein zwischen dem ersten Abschnitt und dem zweiten Abschnitt um die Längsdrehachse gebildeter Winkel größer als ein Zustandsschwellenwert ist.

12. Verfahren nach Anspruch 7, wobei der äußere Abdeckungsbereich, der die Benutzerschnittstellenoberfläche beinhaltet, ein Gewebe ist, in das mindestens eine oder mehrere Schichten von Leuchtdioden oder Berührungskapazität eingewebt sind.

13. Computerlesbares Medium, das computerausführbare Anweisungen speichert, die, wenn sie von einem Prozessor ausgeführt werden, den auf einer faltbaren Anzeigevorrichtung anzuzeigenden Inhalt gemäß den Verfahren nach einem der Ansprüche 7-12 steuern.

## Revendications

1. Dispositif pliable d'affichage (100) comprenant :
une première section (120) qui comporte un premier écran d'affichage (125) ;
une deuxième section (130) qui comporte un second écran d'affichage (135), la première section et la deuxième section étant couplées le long d'un axe longitudinal de rotation (140), la première section et la deuxième section étant configurées de sorte que, en état fermé, le premier écran d'affichage et le second écran d'affichage soient en configuration face à face ; et
une troisième section qui comporte une surface d'interface utilisateur (115) sur un côté opposé de la première section, la surface d'interface utilisateur étant configurée pour permettre une interaction par un utilisateur pour sélectionner un contenu, à l'état fermé, à afficher sur le premier écran d'affichage et/ou sur le second écran d'affichage en état ouvert du dispositif pliable d'affichage,
le dispositif pliable d'affichage étant en outre configuré pour donner la priorité au contenu sélectionné (21) parmi une pluralité de contenus à afficher en activant des applications associées au contenu sélectionné en réponse à la transition du dispositif pliable d'affichage de l'état fermé à l'état ouvert.

2. Dispositif pliable d'affichage selon la revendication 1, dans lequel la surface d'interface utilisateur permettant la sélection de contenu est en outre configurée pour afficher une application activée parmi une pluralité d'applications disponibles sur le dispositif pliable d'affichage.

3. Dispositif pliable d'affichage selon la revendication 2, dans lequel la pluralité d'applications disponibles sur le dispositif pliable d'affichage est en état de veille et
dans lequel l'interaction avec la surface d'interface utilisateur pour sélectionner une application parmi la pluralité d'applications fait passer l'application activée de l'état de veille à un état actif lorsque le dispositif pliable d'affichage passe de l'état fermé à l'état ouvert.

4. Dispositif pliable d'affichage selon la revendication 1, dans lequel le dispositif pliable d'affichage est configuré pour identifier le fait d'être à l'état fermé lorsqu'un angle formé entre la première section et la deuxième section autour de l'axe longitudinal de rotation est inférieur à une valeur seuil d'état.

5. Dispositif pliable d'affichage selon la revendication 1, dans lequel le dispositif pliable d'affichage est configuré pour identifier l'état d'ouverture lorsqu'un angle formé entre la première section et la deuxième section autour de l'axe longitudinal de rotation dépasse une valeur seuil d'état.

6. Dispositif pliable d'affichage selon la revendication 1, dans lequel la troisième section qui comporte la surface d'interface utilisateur est un tissu comptant au moins une ou plusieurs diodes électroluminescentes en couches ou capacités tactiles tissées dans le tissu.

7. Procédé de régulation d'un contenu à afficher sur un dispositif pliable d'affichage, comprenant :
la détection (405) d'une entrée qui identifie une sélection d'utilisateur d'un contenu sur une surface d'interface utilisateur située sur une section extérieure de couverture du dispositif pliable d'affichage, le dispositif pliable d'affichage comportant une première section à premier écran d'affichage et une deuxième section à second écran d'affichage, la première section et la deuxième section étant configurées en état fermé de sorte que le premier écran d'affichage et le second écran d'affichage soient en configuration face à face et la surface d'interface utilisateur étant sur un côté opposé de la première section ; et
l'affichage (410) du contenu sélectionné sur le premier écran d'affichage et/ou sur le second écran d'affichage en état ouvert d'après la détection de l'entrée qui permet la sélection,
la sélection du contenu à afficher sur au moins un écran parmi la pluralité d'écrans d'affichage sur la section intérieure du dispositif pliable d'affichage à l'état ouvert comprenant la priorisation, d'après la détection, d'un contenu sélectionné parmi une pluralité de contenus à afficher par activation d'applications associées au contenu sélectionné en réponse à la transition du dispositif pliable d'affichage de l'état fermé à l'état ouvert.

8. Procédé selon la revendication 7, comprenant en outre :
l'affichage d'une application activée parmi une pluralité d'applications disponibles sur le dispositif pliable d'affichage à la surface de l'interface utilisateur et
la détection de l'entrée sur la surface d'interface utilisateur située sur la section extérieure de couverture étant effectuée en réponse à l'affichage de la pluralité d'applications.

9. Procédé selon la revendication 8, dans lequel la pluralité d'applications disponibles sur le dispositif pliable d'affichage est en état de veille et le procédé comprenant en outre :
le déclenchement, en réponse à la détection de l'entrée, de l'application activée parmi la pluralité d'applications pour passer de l'état de veille à un état actif lorsque le dispositif pliable d'affichage passe de l'état fermé à l'état ouvert.

10. Procédé selon la revendication 7, comprenant en outre :
l'identification du dispositif pliable d'affichage comme étant configuré à l'état fermé lorsqu'un angle formé entre la première section et la deuxième section autour de l'axe longitudinal de rotation est inférieur à une valeur seuil d'état.

11. Procédé selon la revendication 7, comprenant en outre :
l'identification du dispositif pliable d'affichage comme étant configuré à l'état ouvert lorsqu'un angle formé entre la première section et la deuxième section autour de l'axe longitudinal de rotation dépasse une valeur seuil d'état.

12. Procédé selon la revendication 7, dans lequel la section extérieure de couverture qui comporte la surface de l'interface utilisateur est un tissu comptant au moins une ou plusieurs diodes électroluminescentes en couches ou capacités tactiles tissées dans le tissu.

13. Support à lecture informatique stockant des instructions à exécution informatique qui, lorsqu'elles sont exécutées par un processeur, commandent l'affichage du contenu sur un dispositif pliable d'affichage selon les procédés de l'une quelconque des revendications 7 à 12.
